# FASCICULE DE BREVET EUROPEEN

(11) **EP 3 324 361 B1**
(45) Date de publication et mention de la délivrance du brevet: **05.08.2020**
(21) Numéro de dépôt: 17201887.1
(22) Date de dépôt: 15.11.2017
(51) Int. Cl.: G06T 7/246, G06T 7/277

(54) **PROCEDE DE DETECTION ET DE PISTAGE DE CIBLES**
VERFAHREN ZUR ERKENNUNG UND VERFOLGUNG VON ZIELEN
METHOD FOR DETECTING AND TRACKING TARGETS

(30) Priorité: 18.11.2016 FR 1661190
(43) Date de publication de la demande: 23.05.2018
(73) Titulaire: Safran Electronics & Defense, 92100 Boulogne-Billancourt (FR)
(72) Inventeur: RIAZ, Anum, 92100 BOULOGNE BILLANCOURT (FR); MALTESE, Dominique, 92100 BOULOGNE BILLANCOURT (FR)
(74) Mandataire: Cabinet Le Guen Maillet

(56) Documents cités:
- WO-A1-2006/032650
- BLACKMAN S ET AL: "MULTIPLE HYPOTHESIS TRACK CONFIRMATION FOR INFRARED SURVEILLANCE SYSTEMS", IEEE TRANSACTIONS ON AEROSPACE AND ELECTRONIC SYSTEMS, IEEE SERVICE CENTER, PISCATAWAY, NJ, US, vol. 29, no. 3, 1 juillet 1993 (1993-07-01), pages 810-824, XP000398826, ISSN: 0018-9251, DOI: 10.1109/7.220932
- GEORGE C. DEMOS ET AL: "Applications of MHT to dim moving targets", SPIE - INTERNATIONAL SOCIETY FOR OPTICAL ENGINEERING. PROCEEDINGS, vol. 1305, 1 octobre 1990 (1990-10-01), pages 297-308, XP055384012, US ISSN: 0277-786X, DOI: 10.1117/12.21598 ISBN: 978-1-5106-0753-8
- PAVLINA KONSTANTINOVA ET AL: "A study of a target tracking algorithm using global nearest neighbor approach", PROCEEDINGS OF THE 4TH INTERNATIONAL CONFERENCE CONFERENCE ON COMPUTER SYSTEMS AND TECHNOLOGIES E-LEARNING, COMPSYSTECH '03, 1 janvier 2003 (2003-01-01), pages 290-295, XP055384024, New York, New York, USA DOI: 10.1145/973620.973668 ISBN: 978-954-964-133-2

## Description

L'invention concerne un procédé de détection et de pistage de cibles, ainsi qu'un dispositif et un équipement adaptés pour mettre en œuvre ledit procédé.

Des méthodes utilisant une détection et un pistage de cibles (« object détection and tracking » en terminologie anglo-saxonne) sont couramment utilisées pour effectuer des surveillances d'environnement, notamment dans les domaines aérien et maritime. Ces méthodes consistent à saisir successivement une série d'images optroniques de l'environnement, à rechercher dans chacune des images des indices d'une présence d'une cible potentielle, puis lorsque des indices ont été trouvés, à confirmer ou infirmer la présence réelle d'une cible en déterminant si une répétition de détections cohérentes existe dans plusieurs images successives.

Les termes suivants sont utilisés dans la détection et le suivi de cibles :
- Plot ou point chaud (« spot » en terminologie anglo-saxonne) : sous-partie d'une image comprenant des pixels adjacents ayant des caractéristiques homogènes entre elles et différentes des pixels d'un voisinage proche de la sous-partie dans l'image. Un plot est détecté en appliquant un critère de détection. Ce critère de détection peut être établi en fonction d'un niveau moyen de signal et/ou d'un niveau de bruit dans l'image. Par exemple, un pixel peut être considéré comme appartenant à un plot lorsque son niveau de luminance possède un écart avec un niveau moyen de luminance des pixels de son voisinage proche dans l'image supérieur à un seuil de détection prédéfini. Plus généralement, la détection d'un plot peut être basée sur une observation de valeurs de rapport signal à bruit (« Signal to Noise Ratio (SNR) » en terminologie anglo-saxonne) des pixels de l'image. Un pixel dont le SNR est supérieur à un seuil de détection prédéfini est considéré comme appartenant à un plot. Un plot peut correspondre à une cible ou à une aberration de détection dans une image.
- Piste : chaîne spatio-temporelle de plots détectés dans plusieurs images successives. Une piste peut avoir trois états : *piste candidate* (en cours d'initialisation ou bifurquée), *piste confirmée* ou *piste abandonnée.* Les états d'une piste sont actualisés en utilisant une *fonction de gestion de piste.* La fonction de gestion de piste alloue l'état piste candidate à chaque nouvelle piste. Une piste candidate est habituellement initialisée à partir de plots qui n'ont pas été utilisés pour mettre à jour une piste confirmée existante. La fonction de gestion de piste peut confirmer une piste candidate en utilisant des techniques plus ou moins sophistiquées suivant un niveau de performance ou de fausse alarme souhaité. Par exemple, une piste peut être confirmée lorsqu'une chaîne spatio-temporelle de plots peut être construite à partir de plots trouvés dans Q images d'une suite de *P* images consécutives (*P* > *Q*)*.* La fonction de gestion de pistes alloue l'état abandonné à une piste lorsque des caractéristiques de ladite piste ne remplissent plus un critère prédéfini comme par exemple lorsque la piste n'a pas été mise à jour avec un nouveau plot pendant un nombre d'images consécutives supérieur à un seuil prédéfini.
- Algorithme d'affectation de plots aux pistes : Un algorithme d'affectation de plots aux pistes permet d'associer un plot à une piste existante (confirmée ou en cours d'initialisation). Lorsqu'une nouvelle image (dite « image courante ») est obtenue par un procédé de détection et de pistage de cibles, celle-ci est analysée afin d'y rechercher des plots. En parallèle, une prédiction d'une position d'un plot, dit « plot prédit » est effectuée à partir de chaque piste existante afin de déterminer où peut se trouver un plot permettant de poursuivre ladite piste. Cette prédiction de la position du plot prédit se fait généralement en utilisant une *fonction d'entretien de piste.* Une à deux fenêtres de validation sont alors définies autour de la position du plot prédit. On parle alors de fenêtre de prédiction et de fenêtre d'évolution. On cherche alors un plot adapté pour poursuivre ladite piste dans ces fenêtres de validation. L'affectation peut comprendre deux étapes : la pré-corrélation et l'affectation définitive. Lors de la pré-corrélation, on indique les plots candidats à l'association de chaque piste. Il s'agit de prendre en compte tous les plots qui tombent dans la fenêtre de validation de la piste. On forme ainsi un tableau indiquant si un plot fait partie des candidats pouvant être associés à une piste. Lors de l'affectation définitive, on procède à une analyse plus fine des relations entre les plots et les pistes. Il existe diverses méthodes d'affectation définitive. On peut ainsi citer par exemple la méthode du plus proche voisin globale (« Global Nearest Neighbor Approach (GNN) » en terminologie anglo-saxonne) ou la méthode du plus proche voisin sous optimale (« Suboptimal Nearest Neighbor (SNN) » en terminologie anglo-saxonne) décrites toutes deux dans l'article «A study of a target Tracking Algorithm Using Global Nearest Neighbor Approach, P. Konstantinova, International Conference on computer systems and technologies (CompSysTech 2003*) ».*
- Fonction entretien de piste : une fonction entretien de piste assure une estimation à un instant courant et une prédiction à un instant suivant l'instant courant de propriétés cinématiques d'une cible pistée à partir d'une piste. Cette fonction est généralement mise en œuvre par un filtre de Kalman.

Les méthodes de détection et de suivi de cibles doivent trouver un compromis entre détecter efficacement des plots et éviter d'augmenter une probabilité de fausse alarme (*i.e.* de créer des pistes pour des ensembles de pixels ne correspondant pas à des cibles). Il est connu que plus le nombre de plots détectés augmente, plus la probabilité de fausse alarme augmente. Pour que le nombre de plots reste raisonnable, on augmente en général la valeur du seuil de détection.

D'un autre côté, il est connu qu'une cible peut évoluer dans un environnement variable. La demande internationale WO 2006/032650 A1 décrit un procédé de détection et de suivi de pistes de cibles ponctuelles dans lequel des plots fantômes sont détectés par abaissement du seuil de détection lorsqu'aucun plot n'est fourni dans la zone d'association prédite pour une piste validée.

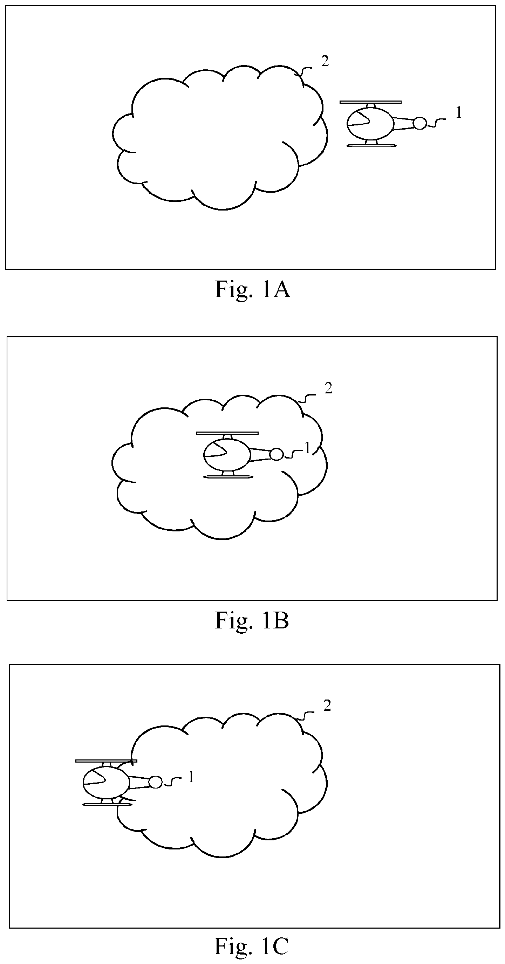

Les Fig. 1A, 1B et 1C représentent une image acquise par un dispositif optronique tel qu'une caméra (non représentée) dans laquelle un aéronef 1 évolue dans un environnement comportant un nuage 2. Lors de son évolution dans cet environnement, l'aéronef 1 passe successivement d'une zone sans nuage à une zone avec nuage, puis revient à une zone sans nuage. L'aéronef 1 est potentiellement une cible pouvant être détectée et pistée par un procédé de détection et de pistage de cible.

Dans l'image représentée par la Fig. 1A, les pixels correspondant à l'aéronef 1 ont des caractéristiques (valeurs de luminance, valeurs de SNR, ...) très différentes des pixels du voisinage de l'aéronef 1. On détecte alors sans difficulté un plot correspondant à l'aéronef 1 dans cette image. En effet, par exemple, les pixels correspondant à l'aéronef 1 ont des valeurs de SNR supérieures à un seuil de détection prédéterminé, ce qui n'est pas le cas des pixels situés au voisinage de l'aéronef 1. Ce plot peut alors être affecté à une piste existante qui aurait été créée à partir d'images précédant l'image de la Fig. 1A.

Dans l'image représentée par la Fig. 1B, les pixels correspondant à l'aéronef 1 sont noyés dans des pixels correspondant au nuage 2. Il est alors difficile de distinguer les pixels correspondant à l'aéronef 1 des pixels correspondant au nuage 2 car ces pixels ont des caractéristiques proches. En effet, le nuage 2 correspond à une zone texturée. Une zone texturée augmente fortement la variation des valeurs des pixels au voisinage d'une cible. La zone texturée entraîne une augmentation du bruit et donc une chute des valeurs de SNR. Par exemple, les pixels correspondant à l'aéronef 1 ont des valeurs de SNR faibles, inférieures au seuil de détection prédéfini, comme les pixels situés au voisinage de l'aéronef 1. La probabilité de ne pas détecter un plot correspondant à l'aéronef 1 est alors importante. Il y a un risque que la piste correspondant au suivi de l'aéronef 1 soit abandonnée.

Dans l'image représentée par la Fig. 1C, l'aéronef 1 retourne dans une zone dans laquelle les pixels qui lui correspondent ont des caractéristiques très différentes des pixels de son voisinage. De nouveau, les pixels correspondant à l'aéronef 1 ont des valeurs de SNR supérieures au seuil de détection prédéterminé. Il redevient alors facile de détecter un plot correspondant à l'aéronef 1. Si la piste a été abandonnée dans l'image correspondant à la Fig. 1B, il y a un risque de discontinuité de pistage, c'est-à-dire qu'une nouvelle piste soit créée avec un nouvel identifiant dans l'image correspondant à la Fig. 1C, alors que la cible (*i.e.* l'aéronef 1) est la même.

Cet exemple montre qu'utiliser un seuil de détection élevé permet d'éviter d'augmenter le nombre de plots détectés, mais en contrepartie, empêche de détecter des plots correspondant à des cibles réelles, lorsque les pixels correspondant à ces cibles sont situés dans un environnement défavorable à une détection.

Il est souhaitable de pallier ces inconvénients de l'état de la technique. Il est notamment souhaitable de proposer une méthode qui permette de suivre une cible dans un environnement défavorable à une détection.

Il est par ailleurs souhaitable de proposer une méthode qui soit simple à mettre en œuvre et qui ait un coût calculatoire faible.

Selon un premier aspect de la présente invention, la présente invention concerne un procédé de détection et de pistage de cibles selon la revendication 1.

L'utilisation de plots de deuxième catégorie permet donc de poursuivre une piste et donc de suivre une cible dans un environnement bruité.

Selon un mode de réalisation, la valeur représentative d'une caractéristique dudit plot est une valeur de SNR représentative de valeurs de SNR de pixels appartenant audit plot, chaque seuil étant une valeur prédéfinie de SNR.

Selon un mode de réalisation, un plot est compatible avec une piste existante lorsqu'il est compris dans une sous-partie de l'image courante, dite fenêtre de validation, correspondant à ladite piste, une fenêtre de validation étant définie autour d'une prédiction d'une position, dite position prédite, dans laquelle doit se trouver un plot correspondant à ladite piste dans l'image courante, ladite position étant obtenue à partir d'une fonction d'entretien de piste en prenant en compte des propriétés cinématiques d'une cible pistée à partir de ladite piste.

Selon un mode de réalisation, lorsqu'une pluralité de plots de première catégorie est compatible avec une piste, le plot de première catégorie le plus proche de la position prédite selon un critère de proximité prédéfini est affecté à ladite piste et lorsqu'une pluralité de plots de deuxième catégorie est compatible avec une piste, le plot de deuxième catégorie le plus proche de la position prédite selon le critère de proximité prédéfini est sélectionné.

Selon un deuxième aspect de l'invention, l'invention concerne un dispositif comprenant des moyens pour mettre en œuvre le procédé selon le premier aspect.

Selon un troisième aspect de l'invention, l'invention concerne un équipement comprenant un dispositif selon le deuxième aspect.

Selon un quatrième aspect de l'invention, l'invention concerne un programme d'ordinateur, comprenant des instructions pour mettre en œuvre, par un dispositif, le procédé selon le premier aspect, lorsque ledit programme est exécuté par un processeur dudit dispositif.

Selon un cinquième aspect de l'invention, l'invention concerne des moyens de stockage, stockant un programme d'ordinateur comprenant des instructions pour mettre en œuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- les Fig. 1A, 1B et 1C illustrent schématiquement des images acquises par un dispositif optronique tel qu'une caméra (non représentée) dans laquelle un aéronef évolue dans un environnement comportant un nuage ;
- la Fig. 2A illustre schématiquement un équipement apte à mettre en œuvre l'invention ;
- la Fig. 2B illustre schématiquement une architecture matérielle d'un module d'analyse apte à mettre en œuvre l'invention ;
- la Fig. 3 illustre schématiquement un procédé de détection et de pistage de cibles selon l'invention ;
- la Fig. 4 illustre schématiquement un premier détail du procédé de détection et de pistage de cibles selon l'invention ;
- la Fig. 5 illustre schématiquement un deuxième détail du procédé de détection et de pistage de cibles selon l'invention.

L'invention est décrite par la suite dans un contexte de surveillance aérienne utilisant un dispositif d'acquisition d'images faisant des acquisitions d'images dans un domaine visible. L'invention pourrait tout aussi bien s'appliquer dans des contextes de surveillance différents tels que la surveillance maritime. Par ailleurs, l'invention s'applique à d'autres types d'images (*i.e.* d'autres domaines spectraux) telles que les images infra-rouges, les images thermiques et les images radar.

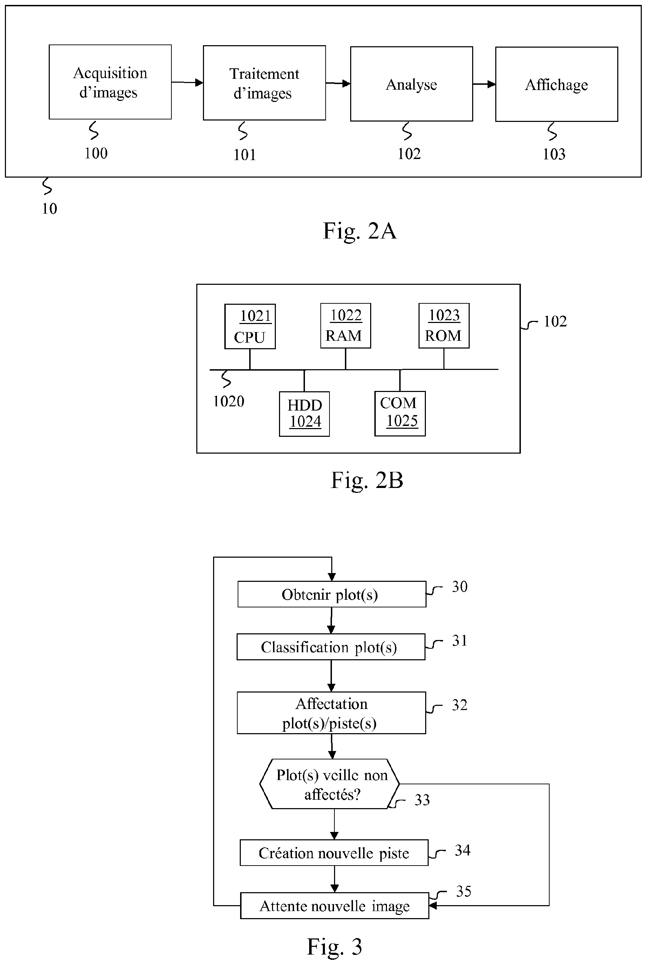

La **Fig. 2A** illustre schématiquement un équipement 10 apte à mettre en œuvre l'invention.

L'équipement 10 comprend un dispositif d'acquisition d'images 100 tel qu'une caméra opérant dans le domaine spectral du visible. Le dispositif d'acquisition d'images 100 fournit les images qu'il a acquises à un dispositif de traitement 101. Le dispositif de traitement d'images 101 est apte, entre autres, à détecter des plots dans chaque image et à calculer au moins une valeur représentative de chaque plot.

Le module de traitement d'images 101 fournit les images acquises, la position de chaque plot détecté et chaque valeur représentative de chaque plot à un module d'analyse 102. Le module d'analyse 102 met en œuvre un procédé de détection et de suivi de cible selon l'invention. Ce procédé que nous décrivons par la suite en relation avec les Figs. 3, 4 et 5 est capable de créer de nouvelles pistes, de confirmer des pistes et d'abandonner des pistes.

Pour chaque image acquise, le module d'analyse 102 transmet une information représentative de chaque piste confirmée à un module d'affichage 103 qui affiche cette information pour qu'elle puisse être utilisée par un opérateur. Par exemple, le module d'analyse 102 fournit au module d'affichage 103 une information représentative d'une position de chaque plot détecté dans la dernière image acquise qui a pu être affecté à une piste confirmée.

On considère que l'équipement 10 forme un système optronique.

Dans la Fig. 2A, les modules d'acquisition d'images 100, de traitement d'images 101, d'analyse d'images 102 et d'affichage 103 sont représentés comme faisant partie d'un même équipement 10. Dans un mode de réalisation, ces modules pourraient aussi être compris dans des équipements ou des dispositifs différents comprenant chacun un module de communication leur permettant de communiquer les uns avec les autres. Ces équipements ou dispositifs forment alors un système optronique apte à mettre en œuvre l'invention.

La **Fig. 2B** illustre schématiquement un exemple d'une architecture matérielle d'un module d'analyse apte à mettre en œuvre l'invention.

Selon l'exemple d'architecture matérielle représenté à la Fig. 2B, le module d'analyse 102 comprend alors, reliés par un bus de communication 1020 : un processeur ou CPU (« Central Processing Unit » en anglais) 1021 ; une mémoire vive RAM (« Random Access Memory » en anglais) 1022 ; une mémoire morte ROM (« Read Only Memory » en anglais) 1023 ; une unité de stockage telle qu'un disque dur ou un lecteur de support de stockage, tel qu'un lecteur de cartes SD (« Secure Digital » en anglais) 1024 ; au moins une interface de communication 1025 permettant au module d'analyse 102 de communiquer avec le module de traitement d'images 101 et le module d'affichage 103.

Le processeur 1021 est capable d'exécuter des instructions chargées dans la RAM 1022 à partir de la ROM 1023, d'une mémoire externe (non représentée), d'un support de stockage (tel qu'une carte SD), ou d'un réseau de communication. Lorsque l'équipement 10 est mis sous tension, le processeur 1021 est capable de lire de la RAM 1022 des instructions et de les exécuter. Ces instructions forment un programme d'ordinateur causant la mise en œuvre complète ou partielle, par le processeur 1021, des procédés décrits ci-après en relation avec les Figs. 3, 4 et 5.

Les procédés décrits en relation avec les Figs. 3, 4 et 5 peuvent être implémentés sous forme logicielle par exécution d'un ensemble d'instructions par une machine programmable, par exemple un DSP (« Digital Signal Processor » en anglais) ou un microcontrôleur, ou être implémentés sous forme matérielle par une machine ou un composant dédié, par exemple un FPGA (« Field-Programmable Gate Array » en anglais) ou un ASIC (« Application-Specific Integrated Circuit » en anglais).

La **Fig. 3** illustre schématiquement un procédé de détection et de pistage de cibles selon l'invention.

Le procédé est mis en œuvre pour chaque image acquise par le module d'acquisition d'images. Une image en cours de traitement par l'équipement 10 est appelée image courante par la suite. On suppose ici qu'au moins une piste, dite piste existante, a été formée à partir de plots détectés dans des images précédant l'image courante. Chaque piste existante peut être une piste confirmée ou une piste bifurquée créée à partir d'une piste confirmée.

Dans une étape 30, le module d'analyse 102 obtient au moins un plot compris dans ladite image courante et pour chaque plot, une valeur représentative d'une caractéristique dudit plot. Dans un mode de réalisation, la valeur représentative d'un plot est par exemple une valeur de SNR moyen des pixels constituant ledit plot.

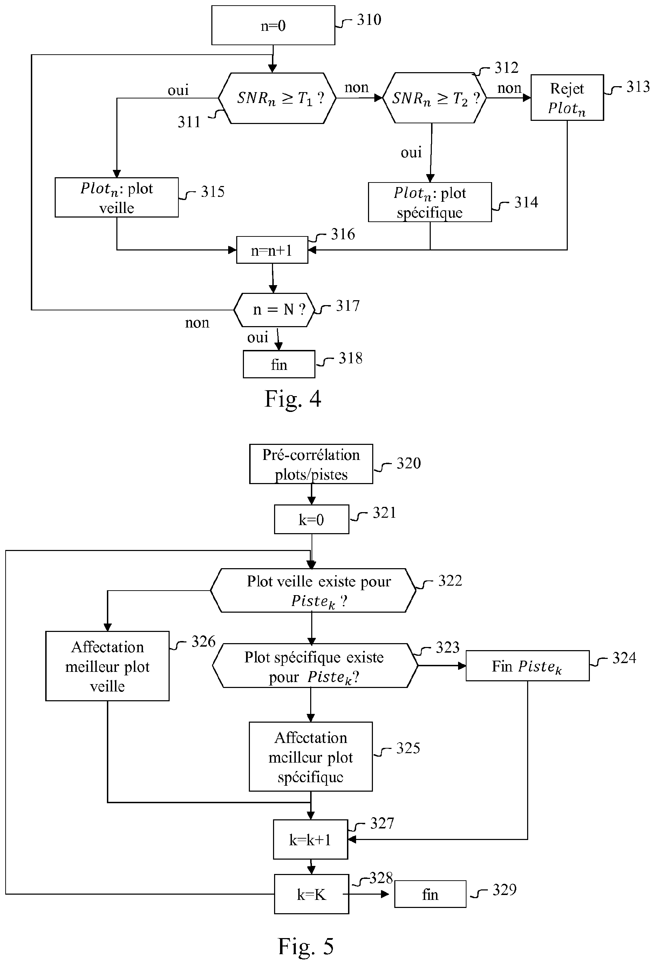

Dans une étape 31, le module d'analyse 102 classe chaque plot en fonction de ladite valeur représentative dans une première catégorie lorsque ladite valeur est supérieure à un premier seuil prédéfini ou dans une deuxième catégorie lorsque ladite valeur représentative est comprise entre le premier seuil prédéfini et un deuxième seuil prédéfini inférieur au premier seuil. La première catégorie comprend des plots pour lesquels la probabilité de fausse alarme est faible, appelés *plots veille.* La deuxième catégorie comprend des plots pour lesquels la probabilité de fausse alarme est plus élevée que pour les plots veille. On appelle les plots classés dans la deuxième catégorie, *plots spécifiques.* Dans le mode de réalisation dans lequel la valeur représentative d'un plot est une valeur de SNR moyen, les premier et deuxième seuils sont des valeurs de SNR obtenues sur des séquences d'images d'entraînement. Nous détaillons par la suite le classement des plots dans des catégories en relation avec la Fig. 4.

Dans une étape 32, le module d'analyse met en œuvre un algorithme d'affectation de plots aux pistes. Dans le cadre de cet algorithme, pour chaque piste existante, le module d'analyse 102 affecte un plot veille à ladite piste existante lorsqu'au moins un plot de première catégorie est compatible suivant un critère prédéfini avec ladite piste existante. Lorsqu'aucun plot veille n'est compatible avec ladite piste existante, le module d'analyse 102 affecte un plot spécifique lorsqu'au moins un plot spécifique est compatible suivant le critère prédéfini avec la piste existante.

De cette manière, on privilégie les affectations de plots veille puisque ce sont les plots qui présentent le moins de risque de fausse alarme *(i.e.* le moins de risque d'engendrer de fausses pistes ou de poursuivre des pistes alors que la cible correspondante n'est plus observée par le module d'acquisition d'image 100). On prend toutefois en compte les plots spécifiques pour poursuivre des pistes existantes pour lesquelles aucun plot veille compatible n'a été trouvé. Ainsi, des pistes sont poursuivies avec des plots de moins bonne qualité en termes de probabilité de fausse alarme. Néanmoins, utiliser des plots spécifiques pour poursuivre une piste existante permet de poursuivre des pistes qui auraient été abandonnées par erreur, lorsque par exemple, une cible traverse un environnement où la détection est difficile ou lorsque la cible se trouve en limite de portée du système d'acquisition d'images 100.

Dans une étape 33, le module de traitement vérifie si des plots veille n'ont pas été affectés à une piste existante.

Si c'est le cas, l'étape 33 est suivie d'une étape 34 au cours de laquelle une piste candidate est créée à partir des plots veille n'ayant pas été affectés à une piste existante.

Suite à l'étape 34 (ou suite à l'étape 33 s'il ne reste pas de plot veille après la mise en œuvre de l'algorithme d'affectation de plots), le module d'analyse 102 met en œuvre une étape 35 au cours de laquelle il se met en attente d'une acquisition d'une nouvelle image.

Dans un mode de réalisation, la valeur représentative d'un plot est une dimension du plot (par exemple une plus grande largeur du plot ou une surface du plot), une entropie des pixels constituant le plot, ou un descripteur SURF (caractéristiques robustes accélérées, « Speeded Up Robust Features (SURF) » en terminologie anglo-saxonne, H. Bay et al., SURF : Speeded Up Robust Features, Computer Vision and Image Understanding (CVIU), Vol. 110, No. 3, pp. 346-359, 2008).

Dans le cas d'autres types de valeurs représentatives d'un plot (dimension du plot, entropie des pixels constituant le plot, descripteur SURF), les seuils utilisés sont adaptés aux valeurs représentatives utilisées.

Dans un mode de réalisation, il est possible de définir un nombre de catégories supérieur à deux. Dans ce cas, le nombre de seuils nécessaires pour classer les plots est augmenté. Ce mode de réalisation est intéressant pour améliorer potentiellement les performances d'affectation des plots aux pistes lorsque de nombreux plots spécifiques sont candidats à l'affectation.

Dans un mode de réalisation, l'étape 31 est mise en œuvre par le module de traitement d'image 101 préalablement à l'étape 30. Le module d'analyse 102 reçoit alors lors de l'étape 30, un ensemble de plots déjà classés et l'information représentative d'une caractéristique d'un plot représente la catégorie de chaque plot.

La **Fig. 4** illustre schématiquement l'étape 31 du procédé de détection et de pistage de cibles selon l'invention.

Dans une étape 310, le module de traitement initialise une variable n à la valeur « 0 ». La variable n sert à comptabiliser les plots à traiter lors de l'étape 31. A chaque itération du procédé décrit en relation avec la Fig. 4, un plot parmi les plots obtenus lors de l'étape 30, noté *Plotₙ*, est analysé par le module d'analyse 102.

Dans une étape 311, le module d'analyse 102 compare la valeur moyenne de SNR représentative du plot *Plotₙ*, notée *SNRₙ*, à un premier seuil *T*₁. Lorsque *SNRₙ* ≥ *T*₁*,* le module d'analyse 102 classe le plot *Plotₙ* dans la catégorie plot veille lors d'une étape 315.

Si *SNRₙ < T*₁*,* l'étape 311 est suivie d'une étape 312 au cours de laquelle le module d'analyse compare la valeur moyenne de SNR *SNRₙ* à un deuxième seuil *T*₂. Lorsque *SNRₙ* ≥ *T*₂, le module d'analyse 102 classe le plot *Plotₙ* dans la catégorie plot spécifique lors d'une étape 314.

Si *SNRₙ* < *T*₂, l'étape 312 est suivie d'une étape 313 au cours de laquelle le plot *Plotₙ* est rejeté par le module d'analyse 102. Le plot *Plotₙ* n'est alors pas utilisé pour prolonger une piste ou pour créer une piste candidate.

Les étapes 315 et 314 sont suivies d'une étape 316 au cours de laquelle le module d'analyse 102 incrémente d'une unité la valeur de la variable *n*.

Dans une étape 317, la valeur de la variable *n* est comparée à une variable *N* représentant un nombre de plots détectés par le module de traitement d'image 101. Si *n<N,* le procédé décrit en relation avec la Fig. 4 se poursuit en retournant à l'étape 311. Si *n*=*N*, ce procédé se termine, ce qui met fin à l'étape 31.

Dans un mode de réalisation *T*₁ = 12*dB* et *T*₂ = 8*dB.*

Dans un mode de réalisation, le seuil *T*₁ est une valeur de SNR prédéfinie, qui peut être mise à jour au cours de l'analyse de la série d'images acquises en fonction de valeurs moyennes de SNR de plots constatées dans les images. Le seuil *T*₂ peut être une valeur relative par rapport au seuil *T*₁. Par exemple, *T*₂ = *T*₁ - 4*dB.*

La **Fig. 5** illustre schématiquement l'étape 32 du procédé de détection et de pistage de cibles selon l'invention.

Dans une étape 320, le module d'analyse effectue une pré-corrélation entre chaque plot classé lors de l'étape 31 et chaque piste existante. Un objectif de cette pré-corrélation est de déterminer pour chaque piste existante, quel plot pourrait correspondre à cette piste. Dans un mode de réalisation, une fonction d'entretien de piste est appliquée à chaque piste afin de déterminer où devrait se trouver un plot correspondant à ladite piste. Cette fonction d'entretien de piste permet de déterminer une position d'un plot prédit et une fenêtre de validation autour dudit plot prédit. Chaque plot apparaissant dans la fenêtre de validation d'une piste est candidate à l'association avec ladite piste.

Dans une étape 321, le module d'analyse 102 initialise une variable *k* à « 0 ». La variable permet d'énumérer les pistes existantes.

Dans une étape 322, le module d'analyse 102 débute une analyse de la *k^{éme}* piste existante, notée *pisteₖ.* Lors de l'étape 322, le module d'analyse 102 détermine si au moins un plot veille correspond à la piste *pisteₖ.* Si c'est le cas, dans un mode de réalisation, le module d'analyse 102 affecte, lors d'une étape 326, le plot veille le plus proche suivant une métrique prédéfinie de la position du plot prédit correspondant à la piste *pisteₖ.* La métrique prédéfinie est par exemple une distance euclidienne.

Sinon, si aucun plot veille ne correspond à la piste *pisteₖ*, dans une étape 323, le module d'analyse 102 détermine si au moins un plot spécifique correspond à la piste *pisteₖ.* Si c'est le cas, dans un mode de réalisation, le module d'analyse 102 affecte, lors d'une étape 325, le plot spécifique le plus proche suivant la métrique prédéfinie de la position du plot prédit correspondant à la piste *pisteₖ.*

Sinon, si aucun plot spécifique ne correspond à la piste *pisteₖ*, le module d'analyse 102 met fin à l'analyse de la piste *pisteₖ* lors d'une étape 324.

Les étapes 326, 323 et 324 sont suivies d'une étape 327 au cours de laquelle le module de traitement incrémente d'une unité la variable *k*.

Dans une étape 328, le module d'analyse 102 compare la valeur de la variable *k* avec une variable *K* correspondant au nombre de pistes existantes. Si la variable *k* égale la variable *K*, le module d'analyse 102 met fin à l'étape 32. Sinon, le module d'analyse 102 met de nouveau en œuvre l'étape 322.

Dans un mode de réalisation, lorsqu'une piste existante n'est pas mise à jour pendant un nombre d'images prédéfini, ladite piste est abandonnée par le module d'analyse 102.

## Revendications

1. Procédé de détection et de pistage de cibles dans une série d'images fournies par un système optronique (10), au moins une chaîne spatio-temporelle de plots, dite piste existante, ayant été formée à partir de plots détectés dans des images de ladite série précédant une image courante, **caractérisé en ce que** le procédé comprend pour l'image courante :
obtenir (30) au moins un plot compris dans ladite image courante et pour chaque plot, une valeur représentative d'une caractéristique dudit plot ;
classer (31) chaque plot en fonction de ladite valeur représentative dans une première catégorie lorsque ladite valeur représentative est supérieure à un premier seuil prédéfini ou dans une deuxième catégorie lorsque ladite valeur représentative est comprise entre le premier seuil prédéfini et un deuxième seuil prédéfini inférieur au premier seuil ;
pour chaque piste existante étant une piste confirmée, et pour chaque piste existante étant une piste candidate créée à partir d'une piste confirmée, affecter (32) un plot de première catégorie à ladite piste existante lorsqu'au moins un plot de première catégorie est compris dans une sous-partie de l'image courante, dite fenêtre de validation, correspondant à ladite piste, une fenêtre de validation étant définie autour d'une prédiction d'une position, dite position prédite, dans laquelle doit se trouver un plot correspondant à ladite piste existante, et lorsqu'aucun plot de première catégorie n'est compris dans ladite fenêtre de validation, affecter un plot de deuxième catégorie lorsqu'au moins un plot de deuxième catégorie est compris dans ladite fenêtre de validation, une affectation à une piste existante permettant de poursuivre ladite piste existante dans l'image courante ;
créer (34) une nouvelle piste pour chaque plot de première catégorie n'ayant pas été affecté à une piste existante.

2. Procédé selon la revendication 1, **caractérisé en ce que** la valeur représentative d'une caractéristique dudit plot est une valeur de SNR représentative de valeurs de SNR de pixels appartenant audit plot, chaque seuil étant une valeur prédéfinie de SNR.

3. Procédé selon la revendication 1 ou 2, **caractérisé en ce que** ladite position prédite est obtenue à partir d'une fonction d'entretien de piste en prenant en compte des propriétés cinématiques d'une cible pistée à partir de ladite piste existante.

4. Procédé selon la revendication 3, **caractérisé en ce que** lorsqu'une pluralité de plots de première catégorie est compatible avec une piste, le plot de première catégorie le plus proche de la position prédite selon un critère de proximité prédéfini est affecté à ladite piste et lorsqu'une pluralité de plots de deuxième catégorie est compatible avec une piste, le plot de deuxième catégorie le plus proche de la position prédite selon le critère de proximité prédéfini est sélectionné.

5. Dispositif (102) comprenant des moyens pour mettre en œuvre le procédé selon l'une quelconque des revendications 1 à 4.

6. Equipement (10) comprenant un dispositif selon la revendication 5.

7. Programme d'ordinateur, **caractérisé en ce qu'**il comprend des instructions pour mettre en œuvre, par un dispositif (102), le procédé selon l'une quelconque des revendications 1 à 4, lorsque ledit programme est exécuté par un processeur dudit dispositif (102).

8. Moyens de stockage, **caractérisés en ce qu'**ils stockent un programme d'ordinateur comprenant des instructions pour mettre en œuvre, par un dispositif (102), le procédé selon l'une quelconque des revendications 1 à 4, lorsque ledit programme est exécuté par un processeur dudit dispositif (102).

## Patentansprüche

1. Verfahren zur Erfassung und zur Spurverfolgung von Zielen in einer Reihe von von einem optoelektronischen System (10) gelieferten Bildern, wobei mindestens eine raum-zeitliche Kette von Punkten, existierende Spur genannt, ausgehend von Punkten geformt wird, die in Bildern der Reihe vor einem aktuellen Bild erfasst wurden, **dadurch gekennzeichnet, dass** das Verfahren für das aktuelle Bild enthält:
Erhalt (30) mindestens eines Punkts, der im aktuellen Bild enthalten ist, und für jeden Punkt eines für ein Merkmal des Punkts repräsentativen Werts;
Einordnen (31) jedes Punkts abhängig von dem repräsentativen Wert in einer ersten Kategorie, wenn der repräsentative Wert höher als eine erste vordefinierte Schwelle ist, oder in einer zweiten Kategorie, wenn der repräsentative Wert zwischen der ersten vordefinierten Schwelle und einer zweiten vordefinierten Schwelle niedriger als die erste Schwelle liegt;
für jede existierende Spur, die eine bestätigte Spur ist, und für jede existierende Spur, die eine Kandidat-Spur ist, die ausgehend von einer bestätigten Spur erzeugt wird, Zuweisen (32) eines Punkts erster Kategorie zur existierenden Spur, wenn mindestens ein Punkt erster Kategorie in einem Teilbereich des aktuellen Bilds, Validierungsfenster genannt, enthalten ist, das der Spur entspricht, wobei ein Validierungsfenster um eine Vorhersage einer Position, vorhergesagte Position genannt, herum definiert ist, in der sich ein Punkt entsprechend der existierenden Spur befinden muss, und wenn kein Punkt erster Kategorie in dem Validierungsfenster enthalten ist, Zuweisen eines Punkts zweiter Kategorie, wenn mindestens ein Punkt zweiter Kategorie im Validierungsfenster enthalten ist, wobei eine Zuweisung zu einer existierenden Spur es ermöglicht, die existierende Spur im aktuellen Bild zu verfolgen;
Erzeugen (34) einer neuen Spur für jeden Punkt erster Kategorie, der keiner existierenden Spur zugewiesen wurde.

2. Verfahren nach Anspruch 1, **dadurch gekennzeichnet, dass** der für ein Merkmal des Punkts repräsentative Wert ein repräsentativer SNR-Wert von SNR-Werten von zum Punkt gehörenden Pixeln ist, wobei jede Schwelle ein vordefinierter SNR-Wert ist.

3. Verfahren nach Anspruch 1 oder 2, **dadurch gekennzeichnet, dass** die vorhergesagte Position ausgehend von einer Spurhaltungsfunktion erhalten wird, indem kinematische Eigenschaften eines Ziels berücksichtigt werden, das ausgehend von der existierenden Spur verfolgt wird.

4. Verfahren nach Anspruch 3, **dadurch gekennzeichnet, dass**, wenn eine Vielzahl von Punkten erster Kategorie mit einer Spur kompatibel ist, der Punkt erster Kategorie, der der vorhergesagten Position gemäß einem vordefinierten Näherungskriterium am nächsten liegt, der Spur zugewiesen wird, und wenn eine Vielzahl von Punkten zweiter Kategorie mit einer Spur kompatibel ist, der Punkt zweiter Kategorie, der der vorhergesagten Position gemäß dem vordefinierten Näherungskriterium am nächsten liegt, ausgewählt wird.

5. Vorrichtung (102), die Einrichtungen zur Durchführung des Verfahrens nach einem der Ansprüche 1 bis 4 enthält.

6. Ausrüstung (10), die eine Vorrichtung nach Anspruch 5 enthält.

7. Computerprogramm, **dadurch gekennzeichnet, dass** es Anweisungen zur Durchführung des Verfahrens nach einem der Ansprüche 1 bis 4 durch eine Vorrichtung (102) enthält, wenn das Programm von einem Prozessor der Vorrichtung (102) ausgeführt wird.

8. Speichereinrichtungen, **dadurch gekennzeichnet, dass** sie ein Computerprogramm speichern, das Anweisungen zur Durchführung des Verfahrens nach einem der Ansprüche 1 bis 4 durch eine Vorrichtung (102) enthält, wenn das Programm von einem Prozessor der Vorrichtung (102) ausgeführt wird.

## Claims

1. Method for detecting and tracking targets in a series of images provided by an optronic system (10), at least one spatio-temporal chain of plots, referred to as an existing track, which has been formed on the basis of plots detected in images of said series preceding a current image, **characterized in that** the method comprises, for the current image:
obtaining (30) at least one plot contained in said current image and, for each plot, a value representative of a characteristic of said plot;
classifying (31) each plot according to said representative value in a first category if said representative value is higher than a first predefined threshold or in a second category if said representative value is between the first predefined threshold and a second predefined threshold, lower than the first threshold;
for each existing track which is a confirmed track, and for each existing track which is a candidate track created on the basis of a confirmed track, assigning (32) a first-category plot to said existing track if at least one first-category plot is contained in a subpart of the current image, referred to as a validation window, corresponding to said track, a validation window being defined around a prediction of a position, referred to as a predicted position, in which a plot corresponding to said existing track should be located, and, if no first-category plot is contained in said validation window, assigning a second-category plot if at least one second-category plot is contained in said validation window, assigning to an existing track making it possible to pursue said existing track in the current image;
creating (34) a new track for each first-category plot which has not been assigned to an existing track.

2. Method according to Claim 1, **characterized in that** the value representative of a characteristic of said plot is an SNR value that is representative of SNR values of pixels belonging to said plot, each threshold being a predefined SNR value.

3. Method according to Claim 1 or 2, **characterized in that** said predicted position is obtained on the basis of a track maintenance function by taking the kinematic properties of a tracked target into account on the basis of said existing track.

4. Method according to Claim 3, **characterized in that** if a plurality of first-category plots is compatible with a track, the first-category plot closest to the predicted position according to a predefined proximity criterion is assigned to said track and if a plurality of second-category plots is compatible with a track, the second-category plot closest to the predicted position according to the predefined proximity criterion is selected.

5. Device (102) comprising means for implementing the method according to any one of Claims 1 to 4.

6. Equipment (10) comprising a device according to Claim 5.

7. Computer program, **characterized in that** it comprises instructions for implementing, by means of a device (102), the method according to any one of Claims 1 to 4, when said program is executed by a processor of said device (102).

8. Storage means, **characterized in that** they store a computer program comprising instructions for implementing, by means of a device (102), the method according to any one of Claims 1 to 4, when said program is executed by a processor of said device (102) .
